## Europäisches Patentamt
## European Patent Office
## Office européen des brevets

(11) Veröffentlichungsnummer: **0 050 250**
**B1**

(12) # EUROPÄISCHE PATENTSCHRIFT

(45) Veröffentlichungstag der Patentschrift:
**13.08.86**

(51) Int. Cl.⁴: **G 01 G 1/24,** G 01 G 3/14

(21) Anmeldenummer: **81107871.6**

(22) Anmeldetag: **02.10.81**

(54) **Plattformwaage.**

(30) Priorität: **20.10.80 DE 3039550**

(43) Veröffentlichungstag der Anmeldung:
**28.04.82 Patentblatt 82/17**

(45) Bekanntmachung des Hinweises auf die Patenterteilung:
**13.08.86 Patentblatt 86/33**

(84) Benannte Vertragsstaaten:
**AT BE FR GB IT NL**

(56) Entgegenhaltungen:
**EP-A-0 014 460
DE-A-1 774 653
FR-A-2 486 649
US-A-3 063 576
US-A-4 023 634
US-A-4 050 532**

(73) Patentinhaber: **Siemens Aktiengesellschaft Berlin und München, Wittelsbacherplatz 2, D-8000 München 2 (DE)**

(72) Erfinder: **Fritz, Harald, Ing.grad., Hebelstrasse 5, D-7517 Waldbronn 3 (DE)**
Erfinder: **Schröder, Heinrich, Dipl.- Ing., Max- Beckmann- Strasse 26, D-7500 Karlsruhe 41 (DE)**

EP 0 050 250 B1

## Beschreibung

Die Erfindung bezieht sich auf eine Rahmenanordnung für eine Plattformwaage aus zwei durch waagerechte Biegefedern miteinander verbundenen Rahmen aus U-Profilträgern, bei der ein unterer Rahmen aufgelagert ist und ein oberer Rahmen eine zu wägende Last trägt, wobei die U-Profilträger für den oberen Rahmen einen breiteren Steg aufweisen als die für den unteren Rahmen und die U-Profilträger des oberen Rahmens mit ihrer U-Öffnung die U-Öffnung der Träger des unteren Rahmens überdecken und der so gebildete Hohlraum die Biegefedern enthält.

Konstruktionsbeispiele einer Plattformwaage sind in der DE-AS 17 74 653 beschrieben. So ist dort in den Figuren 6 und 7 auch eine Plattformwaage zu erkennen, deren lastaufnehmender Rahmen im wesentlichen aus Hohlprofilträgern besteht, die in ihrem Innern Biegefedern aufnehmen. Stützblöcke für die eingespannten Enden der Biegefedern sind mit einem besonderen Fundament verbunden und ragen mit vorgegebenem Spiel durch Öffnungen in den Rahmen aus Hohlprofilträgern hinein. Eine Waage dieser Bauart kann schon ziemlich flach gebaut werden. Außerdem ist bei dieser bekannten Plattformwaage jeweils das eine Ende der Biegefedern am oberen und das andere Ende der Biegefedern am unteren Rahmen fest eingespannt.

Eine noch flachere Bauform ergibt die einleitend beschreibende Rahmenanordnung, die aus der US-PS 3 063 576 entnehmbar ist. Beim Gegenstand der US-PS bestehen die Biegefedern aus einseitig eingespannten Federbalken. Eine derartige Feder weist nur eine Biegezone auf, was zu einem über Dehnungsmeßstreifen abnehmbaren, entsprechend beschränkten Meßeffekt führt. Die beim Gegenstand der DE-AS 1774653 erkennbaren, ebenfalls einseitig eingespannten Parallelbiegefedern weisen demgegenüber mehrere Biegezonen und deshalb einen entsprechend größeren auswertbaren Meßeffekt auf. Dies wird allerdings durch eine schwerer herstellbare und deshalb teurere Federform erkauft.

Der Erfindung lag die Aufgabe zugrunde, mit einer niedrig bauenden Rahmenanordnung unter Verwendung einfacher Biegefedern einen großen Meßeffekt zu erzielen.

Diese Aufgabe wird gemäß der Erfindung bei einer Anordnung der eingangs genannten Art durch die Kombination der kennzeichnenden Merkmale des Anspruchs 1 erreicht. Es ist zusätzlich aus der EP-A-00 14 460 bekannt, daß bei einer Plattformwaage jeder Seite eines von den Rahmen der Waage gebildeten Polygons eine parallel zu der Seite verlaufende Biegefeder zugeordnet ist.

Die Verwendung von beidendig eingespannten Biegefedern liefert infolge der unter Belastung eintretenden S-förmigen Biegung der Federn zwei Biegezonen pro Feder und deshalb einen gegenüber einer einfach eingespannten Feder doppelten, durch Dehnungsmeßstreifen abgreifbaren Meßeffekt. Zusätzlich ist bei Verwendung von am Ober- und am Unterrahmen der Rahmenanordnung fest eingespannten Biegefedern auch eine feste gegenseitige Verbindung der beiden Rahmen erreicht. Dadurch wird sowohl der Transport der Waage als auch die Aufbringung von Lasten erleichtert. Die bei beidendig eingespannten Biegefedern unvermeidbare Verkürzung des Abstandes zwischen ihren Einspannstellen kann durch die gleichsinnige Anordnung der Federn und das zwischen Ober- und Unterrahmen vorgesehene Spiel keine meßwertverfälschende Zusatzspannung in den Biegefedern hervorrufen. Die Verkürzung gleicht sich vielmehr durch eine leichte gegenseitige Verdrehung der beiden Rahmen aus.

Vorteilhafterweise bilden die Flansche des schmäleren U-Profilträgers über den gesamten Umfang des Rahmens Überlastanschläge für den Steg des breiteren U-Profilträgers.

Die Erfindung wird anhand eines Ausführungsbeispiels erläutert, das in drei Figuren dargestellt ist.

Figur 1 stellt eine teilweise aufgeschnittene Aufsicht auf die Rahmenkonstruktion der neuen Plattformwaage dar.

Figur 2 ist ein Längsschnitt durch zwei ineinandergreifende U-Profilträger und eine Biegefeder.

Die Figur 3 stellt einen Querschnitt durch die gleiche Anordnung dar.

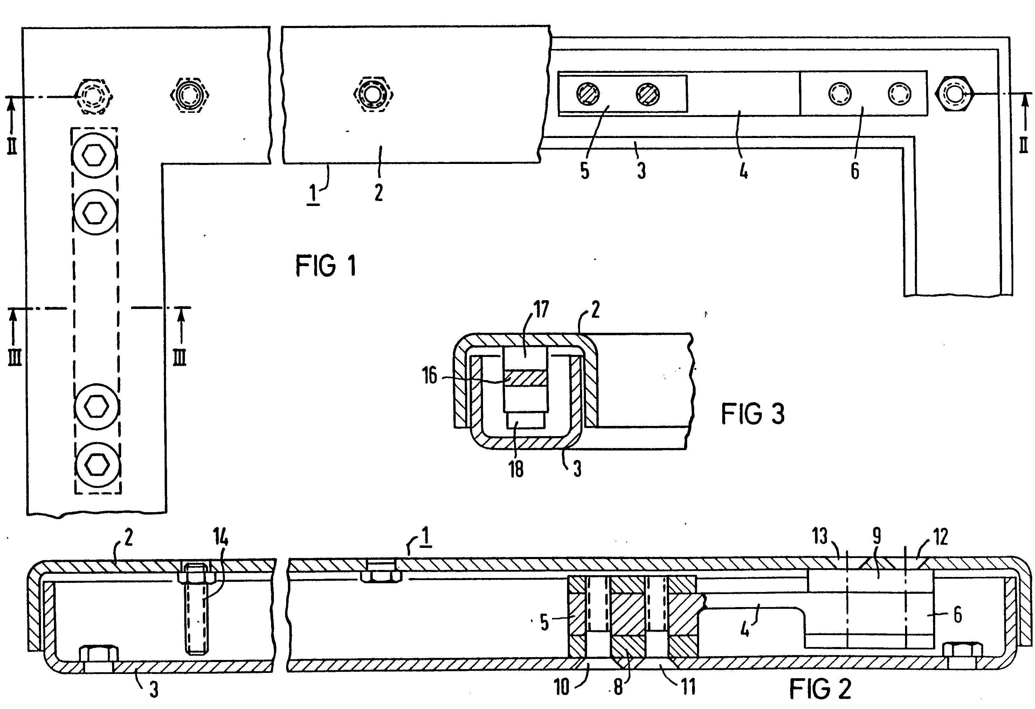

In Figur 1 ist links die Ecke eines Wägerahmens 1 in einer Aufsicht auf den breiteren U-Profilträger 2 dargestellt. Die rechte Seite der Figur zeigt die Rahmenkonstruktion mit weggenommenem, breiteren U-Profilträger, so daß ein Einblick in den schmäleren U-Profilträger 3 vorliegt. Die rechte Seite der Figur läßt auch eine Meß-feder 4 erkennen, die an dem linken Ende 5 mit dem aus dem unteren Rahmen bestehenden, schmäleren Profilträger 3 und mit dem rechten Ende 6 am oberen, aus dem breiteren Profilträger 2 bestehenden verschraubbar ist.

In Figur 2 ist ein Längsschnitt längs der Linie II-II in der Figur 1 gezeigt. Der Schnitt zeigt auch deutlich die Biegefeder 4, die unter Zwischenlage von Distanzstücken 8 bzw. 9 mit jeweils zwei Schrauben 10, 11 bzw. 12, 13 mit dem unteren Rahmen an ihrem linken Ende 5 und mit den oberen Rahmen an ihrem rechten Ende 6 verbunden ist. Ein Gewindestift 14 dient als einstellbarer Anschlag.

In Figur 3 ist ein Querschnitt entlang der Linie III-III der Figur 1 dargestellt. Der obere Profilträger 2 mit breiterem Profil übergreift den unteren U-Profilträger 3. Beide schließen in den entstehenden Hohlraum eine Meßfeder 16 ein. Die Meßfeder 16 unter Zwischenlage eines Distanzstückes 17 ist durch nicht sichtbare Schrauben mit dem aus dem weiteren U-Profilträger 2 bestehenden oberen Rahmen verbunden.

## Patentansprüche

1. Rahmenanordnung für eine ebene Plattformwaage aus zwei durch waagrecht liegende Biegefedern (4, 16) miteinander verbundenen Rahmen aus U-Profilträgern (2, 3) bei der der untere Rahmen aufgelagert ist und der obere Rahmen eine zu wägende Last trägt, wobei die U-Profilträger (2) für den oberen Rahmen einen breiteren Steg aufweisen als die für den unteren Rahmen und mit ihrer U-Öffnung die U-Öffnung der Profilträger (3) für den unteren Rahmen überdecken und der so gebildete Hohlraum die Biegefedern (4, 16) enthält, gekennzeichnet durch die Kombination folgender Merkmale:

a) jeder Seite eines von den Profilträgern (2, 3) gebildeten Polygons ist eine parallel zu ihr verlaufende Biegefeder (4, 16) zugeordnet,

b) die ersten Enden (6) der Biegefedern (4, 16) sind am oberen Rahmen, die zweiten Enden (5) sind am unteren Rahmen fest eingespannt,

c) die Enden (5, 6) der Biegefedern (4, 16) folgen bezüglich einer Umfahrung der Rahmenanordnung derart aufeinander, daß - abhängig von der Richtung der Umfahrung - dem ersten Ende (6) einer der Biegefedern (4, 16) das zweite Ende (5) der folgenden Biegefeder (16,4) oder dem zweiten Ende (5) einer der Biegefedern (4, 16) das erste Ende (6) der folgenden Biegefeder (16, 4) folgt,

d) ein zwischen beiden Rahmen vorgesehenes Spiel ist so bemessen, daß eine durch die Verkürzung des Abstandes zwischen den Einspannstellen jeder Biegefeder (4, 16) im Belastungsfall eintretende leichte gegenseitige Verschiebung der beiden Profilträger in Richtung der durch die Verkürzung auftretenden Kräfte Raum findet.

2. Rahmenanordnung nach Anspruch 1, dadurch gekennzeichnet, daß die Flansche des schmäleren U-Profilträgers (3) Überlastanschläge für den Steg des breiteren U-Profilträgers (2) bilden.

## Claims

I. A frame arrangement for flat platform scales consisting of two frames connected to one another by horizontally positioned bending springs (4, 15) and which consist of U-section carriers (2, 3), wherein the lower frame is supported and the upper frame supports a load which is to be weighed, wherein the U-section carriers (2) of the upper frame have a wider cross-piece than those of the lower frame and cover the U-opening of the U-section carriers (3) of the lower frame with their U-openings, the hollow space so formed containing the bending springs (4, 16), characterised by the combination of the following features:

a) each side of a polygon formed by the U-section carriers (2, 3) is assigned a bending spring (4, 18) which extends parallel thereto,

b) first ends (8) of the bending springs (4, 16) are firmly clamped on the upper frame and the second ends (5) are firmly clamped on the lower frame,

c) considered from the point of view of a passage round the frame arrangement, the ends (5, 8) of the bending springs (4, 16) follow one another in such a way that, independently of the direction of passage, the first end (6) of one of the bending springs (4, 18) follows the second end (5) of the following bending spring (16, 4) or the second end (5) of one of the bending springs (4, 16) follows the end (8) of the following bending spring (16, 4)

d) play provided between the two frames is so regulated that a slight mutual displacement of the two U-section carriers can take place as a result of the shortening of the distance between the clamping points of each bending spring (4 16) on loading, in the direction of the forces resulting from such shortening.

2. A frame arrangement as claimed in Claim I, characterised in that the flanges of the narrower Usection carrier (3) form overload stops for the crosspiece of the wider U-section carrier (2).

## Revendications

1. Châssis pour une bascule, comprenant deux cadres constitués par des profilés en U (2, 3) reliés l'un à l'autre par l'intermédiaire de ressorts de flexion (4, 16) disposés horizontalement, bascule dans laquelle le cadre inférieur repose à plat et le cadre supérieur supporte une charge devant être pesée, les profilés en U (2) qui constituent le cadre supérieur présentant un dos plus large que ceux qui constituent le cadre inférieur et coiffant, par l'ouverture de leur U, l'ouverture du U des profilés (3) formant le cadre inférieur, la cavité ainsi délimitée logeant les ressorts de flexion (4, 16), caractérisé par la combinaison des moyens suivants:

a) à chaque côté d'un polygone formé par les profilés (2, 3) est associé un ressort de flexion (4, 16) s'étendant parallèlement à ce côté,

b) les premières extrémités (6) des ressorts de flexion (4, 16) sont fixées rigidement au cadre supérieur, les secondes extrémités (5) étant assujetties au cadre inférieur,

c) les extrémités (5, 6) des ressorts de flexion (4, 16) se succèdent mutuellement, pour un contournement du châssis, d'une manière telle que, en fonction de la direction de ce contournement, la première extrémité (6) de l'un des ressorts de flexion (4, 16) est suivie de la seconde extrémité (5) du ressort de flexion suivant (16, 4), ou que la seconde extrémité (5) de l'un des ressorts de flexion (4, 16) est suivie de la première extrémité (6) du ressort de flexion suivant (16, 4),

d) un jeu, prévu entre les deux cadres, est dimension né de telle sorte qu'une place est assurée pour un léger décalage mutuel des deux supports profilés, résultant, en présence d'une charge, du raccourcissement de la distance entre les zones de blocage de chaque ressort de flexion (4, 16) dans la direction des forces engendrées par ce raccourcissement.

2. Agencement de châssis selon la revendication 1, caractérisé par le fait que les ailes du profilé en U (3) le plus étroit forment des butées de surcharge pour le dos du profilé en U (2) le plus large.

FIG 1

II — II

III — III

1  2

5  3  4  6

FIG 3

17  2
16
18  3

FIG 2

2  14

3

1

13  9  12

5  4  6

10  8  11

0 050 250